# DEMANDE DE BREVET EUROPEEN

(11) **EP 1 199 763 A1**
(43) Date de publication de la demande: **24.04.2002**
(21) Numéro de dépôt: 01402495.4
(22) Date de dépôt: 27.09.2001
(51) Int. Cl.: H01M 10/34

(54) **Générateur électrochimique étanche à dispositif de recombination amélioré**

(30) Priorité: 16.10.2000 FR 0013214
(71) Demandeur: ALCATEL, 75008 Paris (FR)
(72) Inventeur: Jordy, Christian, 33440 St Louis de Montferrand (FR); Berlureau, Thierry, 33300 Bordeaux (FR); Liska, Jean-Louis, 33160 St Médard en Jalles (FR)
(74) Mandataire: Laroche, Danièle

(57) **Abrégé**

L'invention fournit un générateur électrochimique secondaire étanche de type Ni-MH, à électrolyte alcalin aqueux, comportant un faisceau d'électrodes placé dans une enceinte et composé d'une pluralité d'électrodes négatives et d'électrodes positives, l'espace séparant l'électrode négative de l'électrode positive comportant un séparateur, dans lequel un dispositif de recombinaison est placé entre deux électrodes négatives adjacentes, caractérisé en ce que le séparateur est perméable aux gaz et en ce que le dispositif de recombinaison présente un angle de mouillage d'au moins 45°, une section moyenne de pores d'au moins au moins 10³µm², et une épaisseur comprise entre 0,2 et 5 mm.

## Description

La présente invention concerne un générateur électrochimique secondaire étanche de type Ni-MH, à électrolyte alcalin aqueux, de capacité élevée et de faible pression interne, comportant un faisceau d'électrodes placé dans une enceinte et composé d'une pluralité d'électrodes négatives et d'électrodes positives, l'espace séparant l'électrode négative de l'électrode positive comportant un séparateur, dans lequel un dispositif de recombinaison est placé entre deux électrodes négatives adjacentes.

Les accumulateurs à électrolyte alcalin aqueux sont notamment du type Ni-MH, à savoir nickel et métal ou alliage métallique hydrurable. Les accumulateurs étanches industriels ont une capacité élevée, typiquement de 5 Ah à 400 Ah.

Dans les accumulateurs, la réduction électrochimique (recombinaison) de l'oxygène produit en surcharge par l'électrode positive se fait sur la surface des électrodes négatives. Or, dans les accumulateurs industriels, les faibles pressions autorisées, typiquement moins de 2 bars et une distance inter-électrodes plus élevée ainsi qu'une quantité plus importante d'électrolyte rendent insuffisante la seule recombinaison directe sur les électrodes négatives en regard des électrodes positives. Des dispositifs de recombinaison sont donc placés au niveau des électrodes négatives pour accélérer cette recombinaison.

Les documents FR-1 243 784, US-3,023,258 et US-5,447,806 décrivent des dispositifs de recombinaison sous forme d'espaceur entre deux demi-électrodes négatives, cet espaceur autorise l'oxygène évacué dans le ciel de la cellule (à l'origine de la surpression) à se recombiner sur les surfaces définies par l'espaceur. Notamment, dans le cas du document US-5,447,806 qui est spécifiquement dédié aux accumulateurs de type Ni-MH, cet espaceur est formé par une structure poreuse en métal ou en plastique. Selon les documents FR-1 243 784 et US-3,023,258 plus anciens (donc relatifs à des accumulateurs alcalins mais pas spécifiquement du type Ni-MH) l'espaceur est par exémple en nickel. Dans le cas du document US-5,447,806, les séparateurs utilisés sont imperméables aux gaz.

Ces accumulateurs du type de ceux objets du document US-5,447,806 souffrent de plusieurs défauts.

Les séparateurs (imperméables aux gaz) utilisés ont une résistivité beaucoup plus élevée que des séparateurs très poreux (tels que les non tissés par exemple pour lesquels la résistivité est de l'ordre de 5 fois plus faible à épaisseur identique).

Pour des accumulateurs Ni-MH industriels développés pour l'application véhicule électrique par exemple, les caractéristiques de ces accumulateurs de l'art antérieur ne permettent pas l'obtention de pression inférieure à la pression d'ouverture des soupapes (<3 bars) et nécessitent alors une maintenance (rajout d'eau régulier) ; la raison est que pour des volumes morts faibles (pour augmenter l'énergie volumique) et des quantités d'électrolyte élevée (pour augmenter la durée de vie), les conditions décrites dans le document US-5,447,806 ne permettent pas d'atteindre des pressions faibles.

L'invention permet d'obtenir un accumulateur secondaire de type Ni-MH, qui est sans maintenance, avec une soupape à pression d'ouverture très faible (notamment inférieure à 3 bars), un volume mort faible (pour optimiser l'énergie volumique), une quantité d'électrolyte élevée (pour une durée de vie élevée).

Ce but est atteint en utilisant un dispositif de recombinaison qui soit hydrophobe, poreux et avec une épaisseur minimale.

L'invention fournit donc un générateur électrochimique secondaire étanche de type Ni-MH, à électrolyte alcalin aqueux, comportant un faisceau d'électrodes placé dans une enceinte et composé d'une pluralité d'électrodes négatives et d'électrodes positives, l'espace séparant l'électrode négative de l'électrode positive comportant un séparateur, dans lequel un dispositif de recombinaison est placé entre deux électrodes négatives adjacentes, caractérisé en ce que le séparateur est perméable aux gaz et en ce que le dispositif de recombinaison présente un angle de mouillage d'au moins 45°, une section moyenne de pores d'au moins au moins 10³ µm², et une épaisseur comprise entre 0,2 et 5 mm.

Selon un mode de réalisation, l'angle de mouillage du dispositif de recombinaison est d'au moins 60°.

Selon un mode de réalisation, l'épaisseur du dispositif de recombinaison est comprise entre 0,3 et 2 mm.

Selon un mode de réalisation, le dispositif de recombinaison est en polyéthylène ou en polypropylène.

Selon un mode de réalisation, le dispositif de recombinaison est non-conducteur.

Selon un mode de réalisation, le dispositif de recombinaison est traité en surface avec du PTFE.

Selon un mode de réalisation, le générateur présente une pression de fonctionnement inférieure à 2 bars.

Selon un mode de réalisation, le générateur présente un volume mort inférieur à 2 cc/Ah.

Selon un mode de réalisation, le générateur présente une quantité d'électrolyte supérieure à 1,8 cc/Ah.

Selon un mode de réalisation, le générateur présente une capacité volumique supérieure à 100 Ah.l⁻¹.

D'autres caractéristiques et avantages de l'invention ressortiront de la description suivante, en référence aux dessins annexés dans lesquels:
- la figure 1 est une représentation schématique d'un accumulateur selon l'invention ;
- la figure 2 représente la pression de fin de charge en fonction du volume mort ;
- la figure 3 représente la pression de fin de charge en fonction de la quantité d'électrolyte ;
- la figure 4 représente la pression de fin de charge en fonction de l'épaisseur du dispositif de recombinaison.

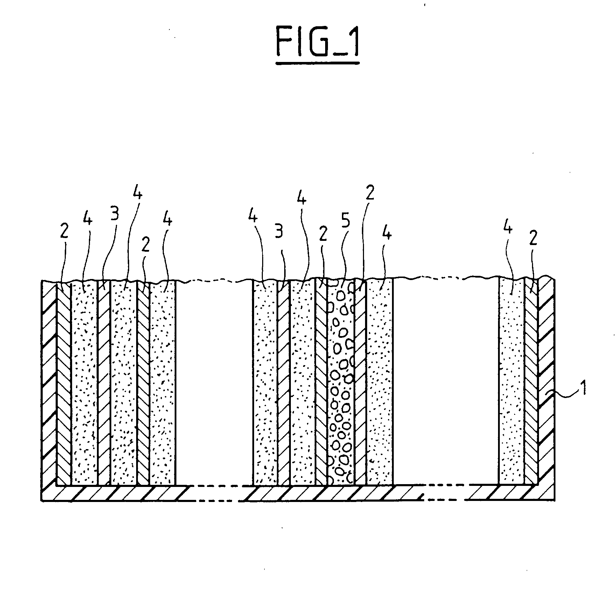

En référence à la figure 1, l'accumulateur selon l'invention comprend dans une enceinte 1 une pluralité d'électrodes négatives 2 et positives 3. Ces électrodes sont séparées par un séparateur 4. Un dispositif de recombinaison 5 est placé entre deux électrodes négatives 2. Un accumulateur selon l'invention comprend en général n électrodes positives (n ≥ 2), p dispositifs de recombinaison (p ≥ 1) et q électrodes négatives (q ≥ n+p+1), pour lequel chaque dispositif de recombinaison est placé entre deux électrodes négatives.

Dans l'exemple représenté, il y a 8 électrodes positives et 10 électrodes négatives et 1 dispositif de recombinaison central. Si plusieurs dispositifs sont prévus, il seront répartis de façon appropriée.

L'électrode positive est classique. Elle est en général formée d'un support conducteur sous forme de mousse, par exemple à base de Co ou de Ni et d'une matière active à base de Ni(OH)₂ (notamment de forme sphérique) contenant éventuellement Co et/ou Zn (syn)cristallisés. Son épaisseur est classique.

L'électrode négative est classique. Elle est en général formée d'un métal ou d'un alliage hydrurable, par exemple à base de Mischmétal Mm, Ni, Mn, Al et Co; en général associé à de la poudre de carbone. Le collecteur de courant est par exemple un feuillard d'acier nickelé perforé. Son épaisseur est classique.

La distance inter-électrodes est par exemple de 0,15 à 0,60 mm.

Le séparateur est perméable aux gaz (notamment sa perméabilité est d'au moins 1 cc.s⁻¹.m⁻²). Il est par exemple en un non-tissé à base de polymère, notamment polyoléfine. Si besoin est, un traitement peut être appliqué. Ce séparateur peut avoir une masse surfacique comprise entre 30 et 100 g/m². Le séparateur peut comprendre deux ou plus sous-couches en non-tissé par exemple. Son épaisseur est classique.

L'électrolyte utilisé dans l'accumulateur selon l'invention est classique. Il s'agit par exemple d'une solution aqueuse de soude, potasse et de lithine.

Le dispositif de recombinaison comprend un matériau hydrophobe, ayant une structure poreuse et présentant une épaisseur appropriée.

L'hydrophobicité est matérialisée par la mouillabilité à l'électrolyte, qui est de préférence telle que l'angle de mouillage (ou angle de contact entre la surface du dispositif de recombinaison et l'électrolyte) est supérieur à 45°, de préférence supérieur à 60°. Pour déterminer cet angle de mouillage, on nettoie la surface avec de la potasse densité 1,30, on sèche à température ambiante et on réalise la mesure en utilisant à nouveau de la potasse densité 1,30. A titre d'exemple, le polyéthylène (comme le polypropylène) présente un angle de contact de 70°, qui peut être porté à 90° par traitement de surface hydrophobe. Des matériaux qui ne sont pas appropriés sont par exemple le PVC (angle de contact d'environ 43°), ainsi que le nickel (angle de contact inférieur à 10°) et le carbone dont l'angle de contact est très inférieur à 45°. Le traitement de surface pour rendre le matériau hydrophobe peut comprendre l'application de polytétrafluoroéthylène (PTFE).

Le matériau constitutif de ce dispositif de recombinaison peut être conducteur ou non ; de préférence il est en plastique. Notamment, il peut être en polyoléfine telle que polyéthylène (par exemple haute densité) ou polypropylène.

La structure poreuse (porosité ouverte) est matérialisée par une section moyenne de pores. Cette section moyenne de pores est de préférence au moins 10³ µm², par exemple environ 3,5 mm².

L'épaisseur est par exemple comprise entre 0,2 et 5 mm, de préférence entre 0,3 et 2 mm.

Les caractéristiques de l'espace de recombinaison mentionnées ci dessus permettent, même pour des quantités d'électrolyte élevées et un volume mort très faible, d'éviter que cet espace se remplisse d'électrolyte (le remplissage de la porosité de l'espace de recombinaison réduirait de manière très importante l'accès à l'oxygène et entraînerait ainsi une augmentation de pression supérieure à la pression d'ouverture de la soupape).

Avec l'invention, on obtient un accumulateur sans maintenance (donc sans rajout d'eau régulier), présentant une pression de fonctionnement faible (moins de 3 bars, et en particulier comprise entre 1 et 2 bars), une capacité élevée (plus de 5 Ah, et en particulier de 10 à 500 Ah), une capacité volumique élevée (plus de 100 Ah.l⁻¹, et en particulier de 100 à 250 Ah.l⁻¹), un volume mort faible et une quantité d'électrolyte élevée.

Le volume mort, défini comme étant égal au volume interne total de l'accumulateur moins la somme des volumes des composants et de l'électrolyte, est notamment inférieur à 2 cc/Ah, en particulier compris entre 0,5 et 1,5 cc/Ah. Ce faible volume mort permet d'optimiser l'énergie volumique.

La quantité d'électrolyte est notamment supérieure à 1,8 cc/Ah, et en particulier entre 1,8 et 2,5 cc/Ah. Une quantité élevée d'électrolyte garantit une durée de vie longue, typiquement plus de 1000 cycles.

Les accumulateurs selon l'invention sont classiquement prismatiques (parallélépipédiques, avec des électrodes planes).

Les accumulateurs selon l'invention trouvent à s'appliquer dans des domaines variés comme les véhicules électriques, l'aéronautique, le stationnaire, le ferroviaire, etc.

L'invention est illustrée par les exemples non-limitatifs suivants.

### Exemple

On construit un accumulateur étanche de 25 Ah comprenant 8 électrodes positives, 10 électrodes négatives, et un espace de recombinaison (EDR) répartis selon la disposition suivante:
/-/s/+/s/-/s/+/s/-/s/+/s/-/s/+/s/-/**EDR**/-/s/+/s/-/s/+/s/-/s/+/s/-/s/+/s/-/
/+/ : les électrodes positives sont constituées d'hydroxyde de nickel et de cobalt et d'un support en mousse de nickel.
/-/ : les électrodes négatives sont constituées d'un alliage hydrurable à base de Mm, Ni, Mn, Al et Co sous forme de poudre associé à de la poudre de carbone.
/s/ : le séparateur est un non-tissé double couche à base de polyoléfine hydrophile qui permet un bon transfert ionique.
/EDR/ : espace de recombinaison constitué d'une grille en polyéthylène haute densité, d'épaisseur 1 mm, un angle de contact avec l'électrolyte de 70°, et une section moyenne de pores de 3,5 mm².

L'électrolyte utilisé est un mélange concentré de soude, de potasse et de lithine. La quantité utilisée est de 56 cc soit 2,24 cc/Ah. Le volume mort est estimé à 0,8 cc/Ah.

L'ensemble du faisceau est monté dans un bac en polypropylène. Un couvercle sur lequel est montée une soupape (tarée à 2 bars) est ensuite thermosoudée.

L'accumulateur subit un cycle de formation électrique. On mesure l'augmentation de pression en surcharge au régime de C/10.

On a réalisé plusieurs accumulateurs, avec des dispositifs de recombinaison variables. Les données sont fournies dans le tableau ci-après (en surcharge à C/10). Le terme "angle" représente l'angle de mouillage, à savoir l'angle de contact avec l'électrolyte.

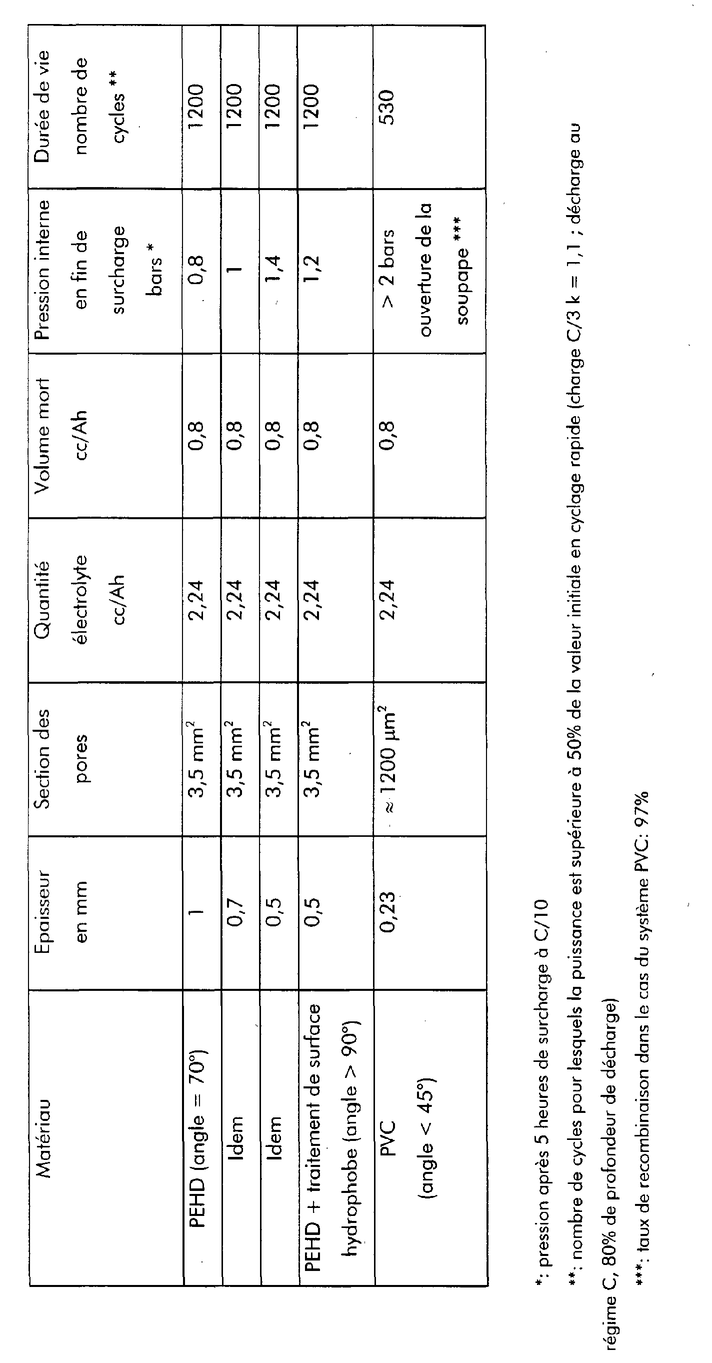

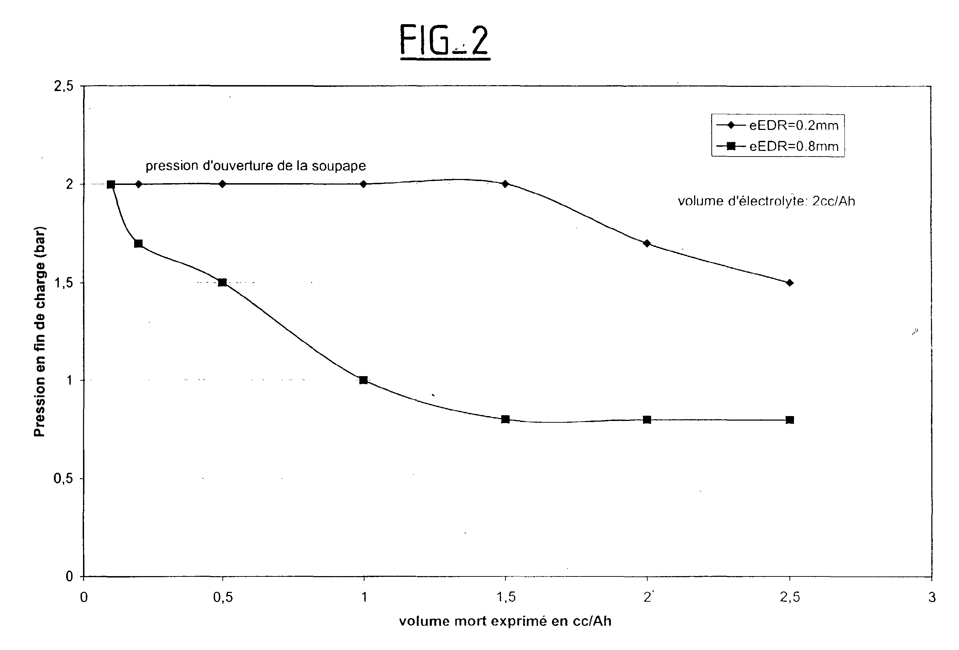

La figure 2 représente la pression de fin de charge en fonction du volume mort, pour deux EDR, l'un d'épaisseur 0,2 mm, l'autre d'épaisseur 0,8 mm. La soupape est tarée à 2 bars. L'EDR est en PEHD comme dans le tableau ci-dessus. On remarque que la pression de fin de charge reste inférieure à 2 bars pour l'EDR d'épaisseur 0,2 mm jusqu'à un volume mort de 1,5 cc/Ah, tandis que le volume mort peut être aussi faible que 0,2 cc/Ah avec l'EDR d'épaisseur 0,8 mm.

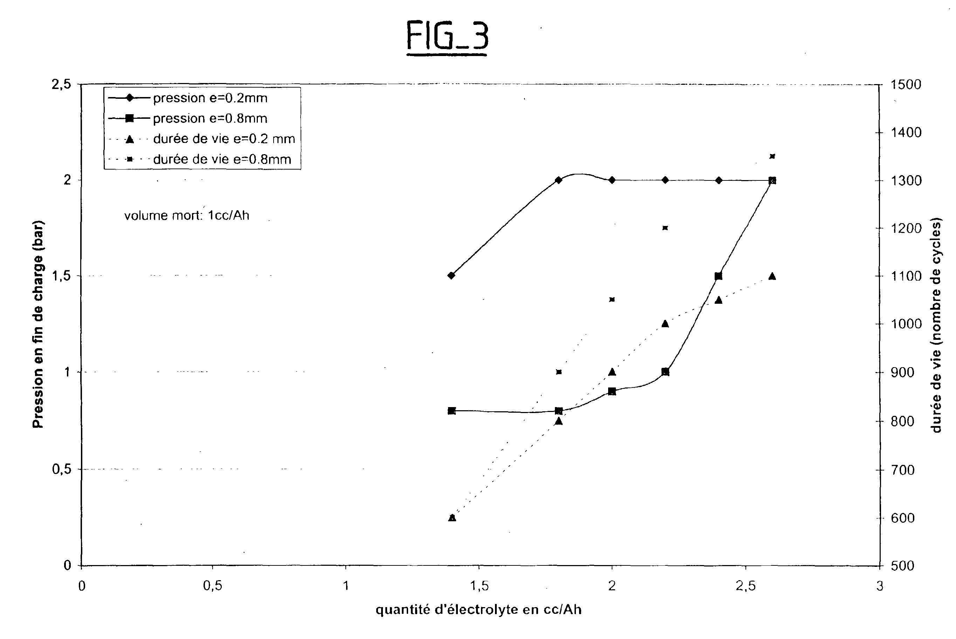

La figure 3 représente la pression de fin de charge en fonction de la quantité d'électrolyte, pour deux EDR, l'un d'épaisseur 0,2 mm et l'autre d'épaisseur 0,8 mm. La soupape est tarée à 2 bars. L'EDR est en PEHD comme dans le tableau ci-dessus. On remarque que la pression de fin de charge reste inférieure à 2 bars pour l'EDR d'épaisseur 0,2 mm jusqu'à une quantité de 1,8 cc/Ah, tandis que la quantité d'électrolyte peut monter jusqu'à 2,5 cc/Ah avec l'EDR d'épaisseur 0,8 mm.

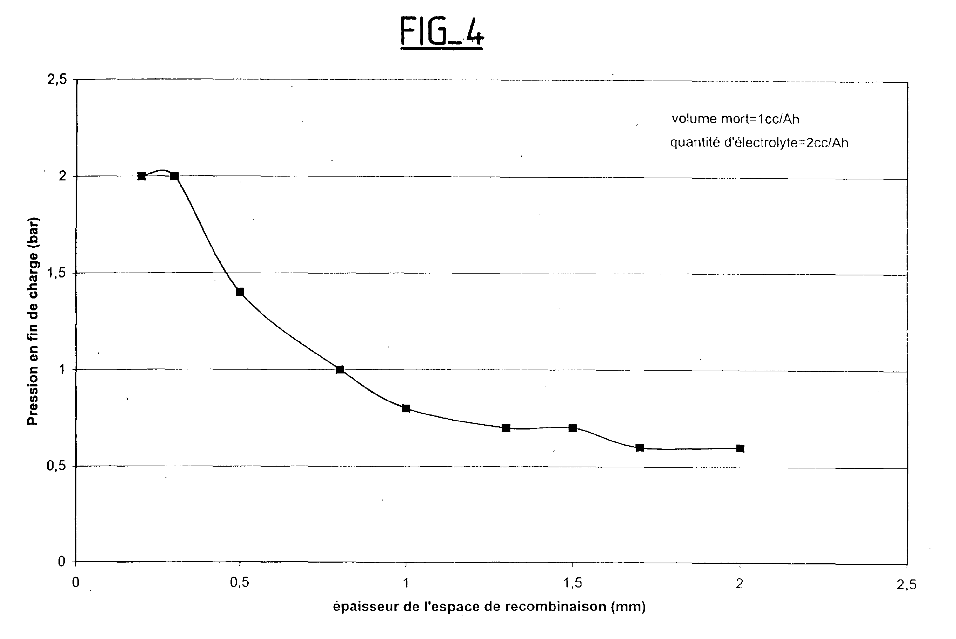

La figure 4 représente la pression de fin de charge en fonction de l'épaisseur de l'EDR. La soupape est tarée à 2 bars. L'EDR est en PEHD comme dans le tableau ci-dessus. On remarque que la pression de fin de charge reste inférieure à 3 bars pour un EDR jusqu'à une épaisseur d'environ 0,2 mm et inférieure à 2 bars pour un EDR jusqu'à une épaisseur d'environ 0,3 mm.

Les valeurs ci-dessus démontrent que l'invention permet d'obtenir un accumulateur avec une faible pression, une grande capacité, une grande capacité volumique, sans maintenance, avec un faible volume mort et une grande quantité d'électrolyte.

L'invention n'est pas limitée aux modes de réalisation décrits mais est susceptible de nombreuses variantes aisément accessibles à l'homme de l'art.

## Revendications

1. Générateur électrochimique secondaire étanche de type Ni-MH, à électrolyte alcalin aqueux, comportant un faisceau d'électrodes placé dans une enceinte (1) et composé d'une pluralité d'électrodes négatives (2) et d'électrodes positives (3), l'espace séparant l'électrode négative de l'électrode positive comportant un séparateur (4), dans lequel un dispositif de recombinaison (5) est placé entre deux électrodes négatives adjacentes, **caractérisé en ce que** le séparateur (4) est perméable aux gaz et **en ce que** le dispositif de recombinaison (5) présente un angle de mouillage d'au moins 45°, une section moyenne de pores d'au moins au moins 10³ µm², et une épaisseur comprise entre 0,2 et 5 mm.

2. Générateur selon la revendication 1, dans lequel l'angle de mouillage du dispositif de recombinaison est d'au moins 60°.

3. Générateur selon l'une des revendications 1 et 2, dans lequel l'épaisseur du dispositif de recombinaison est comprise entre 0,3 et 2 mm.

4. Générateur selon l'une des revendications précédentes, dans lequel le dispositif de recombinaison est en polyéthylène ou en polypropylène.

5. Générateur selon l'une des revendications précédentes, dans lequel le dispositif de recombinaison est non-conducteur.

6. Générateur selon l'une des revendications précédentes, dans lequel le dispositif de recombinaison est traité en surface avec du PTFE.

7. Générateur selon l'une des revendications précédentes, présentant une pression de fonctionnement inférieure à 2 bar.

8. Générateur selon l'une des revendications précédentes, présentant un volume mort inférieur à 2 cc/Ah.

9. Générateur selon l'une des revendications précédentes, présentant une quantité d'électrolyte supérieure à 1,8 cc/Ah.

10. Générateur selon l'une des revendications précédentes, présentant une capacité volumique supérieure à 100 Ah.l⁻¹.
